# EUROPÄISCHE PATENTSCHRIFT

(11) **EP 0 830 894 B1**
(45) Veröffentlichungstag und Bekanntmachung des Hinweises auf die Patenterteilung: **05.12.2001**
(21) Anmeldenummer: 97115513.0
(22) Anmeldetag: 08.09.1997
(51) Int. Cl.: B01J 19/26, B01F 5/06, B01J 19/18

(54) **Mischer-Reaktor und Verfahren zur Durchführung von Reaktionen, insbesondere die Phosgenierung von primären Aminen**
Mixer-reactor and process to perform reactions, especially phosgenation of primary amines
Réacteur-mélangeur et procédé pour réaliser des réactions, en particulier la phosgénation d'amines primaires

(30) Priorität: 20.09.1996 DE 19638567
(43) Veröffentlichungstag der Anmeldung: 25.03.1998
(73) Patentinhaber: BAYER AG, 51368 Leverkusen (DE)
(72) Erfinder: Gallus, Manfred, Dr., 47802 Krefeld (DE); Müller, Harald, Dr., 41539 Dormagen (DE); Weber, Bernd, 47800 Krefeld (DE)

(56) Entgegenhaltungen:
- GB-A- 1 013 888
- US-A- 2 389 486
- US-A- 4 851 571
- US-A- 4 915 509
- US-A- 5 117 048

## Beschreibung

Die Erfindung betrifft einen Mischer-Reaktor zur Vermischung und Durchführung bzw. Einleitung einer Reaktion von mindestens zwei fließfähigen Stoffen, insbesondere zur Herstellung von Mono- oder Polyisocyanaten durch Umsetzung der den Mono- oder Polyisocyanaten entsprechenden Mono- oder Polyamine mit in organischem Lösungsmittel gelöstem Phosgen.

Es ist bekannt, solche schnell einsetzenden Reaktionen in einem Mischer-Reaktor durchzuführen, der aus einem im wesentlichen rotationssymmetrischen Gehäuse besteht, wobei das Gehäuse eine im wesentlichen rotationssymmetrische Mischkammer mit getrennten Einlässen für die mindestens zwei Stoffe und einen Auslaß aufweist, wobei der Einlaß für den mindestens ersten Stoff in der Achse der Mischkammer vorgesehen ist und der Einlaß für den mindestens zweiten Stoff in Form einer Vielzahl von rotationssymmetrisch zur Mischkammerachse angeordneten Düsen ausgebildet ist; siehe z.B. US-A 4 851 571, US-A 4 915 509 und US-A 5 117 048.

Die Qualität von in derartigen Apparaten hergestellten Produkten hängt sehr stark von der Güte und Geschwindigkeit der Vermischung der mindestens zwei fließfähigen Stoffe ab. Dabei spielt insbesondere die Eindüsung gleichmäßiger Masseströme durch jede der Düsen in die Mischkammer eine entscheidende Rolle.

Nachteilig an den bekannten Mischer-Reaktoren ist, daß es innerhalb der Düsen im Laufe der Zeit zu Anbackungen bis hin zu Verstopfungen kommt, so daß die Eindüsung gleicher Massenströme durch alle Düsen gestört wird. Zumindest an den zweiten Stoff sind daher hohe Anforderungen bezüglich Freiheit an Feststoffen bzw. reagierbaren Fremdstoffen zu stellen. Ein erhöhtes Verstopfungsrisiko tritt insbesondere dann auf, wenn der zweite Stoff in einem Lösungs- bzw. Suspendiermedium gelöst oder suspendiert wird, das Lösungs- bzw. Suspendiermedium von dem Produkt abgetrennt und wieder verwendet wird. Zur Reduktion der Anbackungs- und Verstopfungsneigung ist es erforderlich, einen hohen Reinigungsaufwand für das wieder zu verwendende Lösungs- bzw. Suspendiermedium zu treiben. Durch Nebenreaktionen mit dem ersten Stoff können ferner Anbackungen auf der Mischer-Eingangsseite der Düsen auftreten. Im Falle auftretender Anbackungen-und/oder Verstopfungen muß der kontinuierliche Prozeß unterbrochen werden, der Mischer-Reaktor auseinandergebaut und gereinigt werden. Dies bedingt erhebliche Stillstandszeiten. Bei Einsatz gefährlicher Stoffe, wie im Falle von Phosgen, sind bei der Demontage des Mischer-Reaktors aufwendige arbeitshygienische Maßnahmen erforderlich, wie intensives Spülen des Reaktors vor der Demontage, Schutzkleidung, Absaugen der Atmosphäre, Atemschutzgerät, usw.

Gegenstand der Erfindung ist ein Mischer-Reaktor zur Vermischung und Durchführung bzw. Einleitung einer Reaktion von mindestens zwei fließfähigen Stoffen, der aus einem im wesentlichen rotationssymmetrischem Gehäuse besteht, das eine Mischkammer mit getrennten Einlässen für die mindestens zwei Stoffe mit einem Auslaß enthält, wobei der Einlaß für den mindestens ersten Stoff in der Achse der Mischkammer vorgesehen ist und der Einlaß für den mindestens zweiten Stoff in Form einer Vielzahl von rotationssymmetrisch zur Achse der Mischkammer angeordneten Düsen ausgebildet ist, mit dem Kennzeichen, daß jeder Düse ein in Richtung der Düsenachse verschiebbarer Bolzen zugeordnet ist.

Die Bolzen sind vorzugsweise innerhalb einer der Mischkammer vorgeordneten Verteilkammer, in die der mindestens zweite Stoff eingeleitet wird und innerhalb der dieser auf die Vielzahl von Düsen verteilt wird, angeordnet.

Im Falle von sich ausbildenden Anbackungen und/oder Verstopfungen der Düsen, was durch einen Druckanstieg in der Zuleitung für den mindestens zweiten Stoff feststellbar ist, werden die Düsen durch axiale Verschiebung der Bolzen durchstoßen und Anbackungen bzw. Verstopfungen entfernt.

Durch den erfindungsgemäßen Mischer-Reaktor werden demgemäß die Produktionsausfallzeiten für die Reinigung der Düsen auf wenige Sekunden reduziert.

Üblicherweise sind die Düsen in Form von konzentrisch um die Mischkammerachse angeordneten Durchgangsbohrungen durch die Trennwand zwischen Verteilkammer und Mischkammer ausgebildet. Die Anzahl der Düsen kann 6 bis 32 betragen. Der Durchmesser der Düsen beträgt typischerweise zwischen 1 und 10 mm. Die Längsausdehnung und der minimal mögliche Hub der Bolzen übersteigt die Längsausdehnung der Düsenbohrungen.

Während des Betriebes des erfindungsgemäßen Mischer-Reaktors gibt der Bolzen den Düseneingang frei. Vorzugsweise hat die Stirnfläche des Bolzens während des Betriebes einen solchen Abstand vom Eingang der Düse, daß die Eintrittsströmung des fließfähigen Stoffes in die Düse gedrosselt wird. Die dadurch erzeugte Turbulenz reduziert das Risiko der Ausbildung von Anbackungen in der Düse.

Nach einer weiter bevorzugten Ausführungsform der Erfindung kann das stirnseitige Ende des Bolzens so gestaltet sein, daß eine rotierende Einlaufströmung erzeugt wird.

Die Mischkammer kann in Form eines Venturi-Rohres ausgebildet sein, wobei die Düsen zur Einleitung des mindestens zweiten Stoffes im wesentlichen radial an der engsten Stelle des Venturi-Rohres in die Mischkammer einmünden. Eine solche Mischkammer ist in US-A 5 117 048 offenbart.

Nach einer anderen Ausführungsform der Erfindung ist die Mischkammer in Form eines Kreiselmischers mit Rotor- und Statormischelementen ausgebildet. Derartige Mischer-Reaktoren sind beispielsweise aus US-A 4 915 509 und GB-A 2 169 814 bekannt. Dabei kann auf der Rotorachse im Anschluß an die eigentliche Mischkammer ein Laufrad vorgesehen sein, das die Abförderung des vermischten und gegebenenfalls reagierten Stromes unterstützt.

Im Falle eines Kreiselmischers sind die Düsen vorzugsweise auf der Stirnfläche des Mischers parallel zur Mischerachse angeordnet. In diesem Fall sind die Bolzen vorzugsweise auf einem gemeinsamen Tragring befestigt, der über eine durch das Gehäuse der Verteilkammer hindurchgeführte Achse verschiebbar ist. Die Durchführung durch die Achse ist vorzugsweise gasdicht gekapselt, beispielsweise durch einen verschweißten Faltenbalg.

Insbesondere geeignet ist der erfindungsgemäße Mischer-Reaktor als Vorphosgenierungsreaktor zur Herstellung von Isocyanaten. Dabei wird als mindestens erster Stoff in einem organischen Lösungsmittel gelöstes Phosgen und als mindestens zweiter Stoff gegebenenfalls in einem Lösungsmittel gelöstes primäres Amin eingesetzt. Hinsichtlich der Einsatzstoffe und Reaktionsbedingungen im einzelnen wird vollinhaltlich auf die US-A 4 851 571, US-A 5 117 048 sowie WO 96/16 028 Bezug genommen. Dabei kann als Lösungsmittel für das Phosgen auch Isocyanat eingesetzt werden (WO 96/16 028).

Die Erfindung wird nachfolgend anhand der beigefügten Figuren näher erläutert:
- Fig. 1: zeigt einen erfindungsgemäßen Mischer-Reaktor, wobei die Mischfunktion durch einen Kreiselmischer dargestellt ist.
- Fig. 2, 3 und 4: zeigen vergrößerte und alternative Darstellungen des Details A aus Figur 1.
- Fig. 5: zeigt einen erfindungsgemäßen Mischer-Reaktor, wobei die Mischfunktion durch ein Venturi-Rohr dargestellt ist.

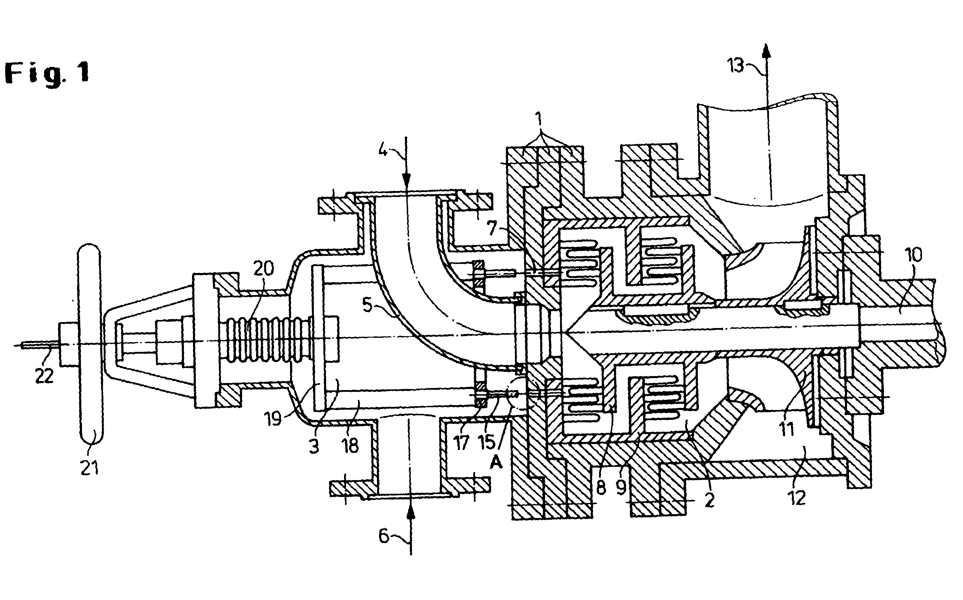

Der als axialer Schnitt dargestellte Mischer-Reaktor gemäß Fig 1 besteht aus einem Gehäuse 1, das eine Mischkammer 2 und eine Verteilkammer 3 aufweist. Der mindestens erste Stoffstrom 4 wird über ein in die Verteilkammerwand seitlich eintretendes gebogenes Rohr 5 axial in die Mischkammer 2 eingeleitet. Der mindestens zweite Stoffstrom 6 wird in die Verteilkammer 3 eingeleitet und gelangt über eine Vielzahl zur Achse des Mischer-Reaktors konzentrische parallele Düsenbohrungen 7 in die Mischkammer 2. Die Mischkammer 2 enthält über eine Achse 10 angetriebene Rotorelemente 8 und mit dem Gehäuse verbundene Statorelemente 9. Ferner ist ein Laufrad 11 vorgesehen, das die Mischung über den Ringkanal 12 in das Auslaßrohr 13 fördert. Erfindungsgemäß sind jeder Düse 7 zugeordnete Bolzen 15 vorgesehen, die auf einem Tragring 17 befestigt sind. Der Tragring 17 ist über Distanzstücke 18 mit einer Platte 19 verbunden, die über eine Achse 22 mittels Handrad 21 in axialer Richtung verschiebbar ist. Die Durchführung der Achse 22 durch die Verteilkammerwand ist mittels Faltenbalg 20 gasdicht gekapselt.

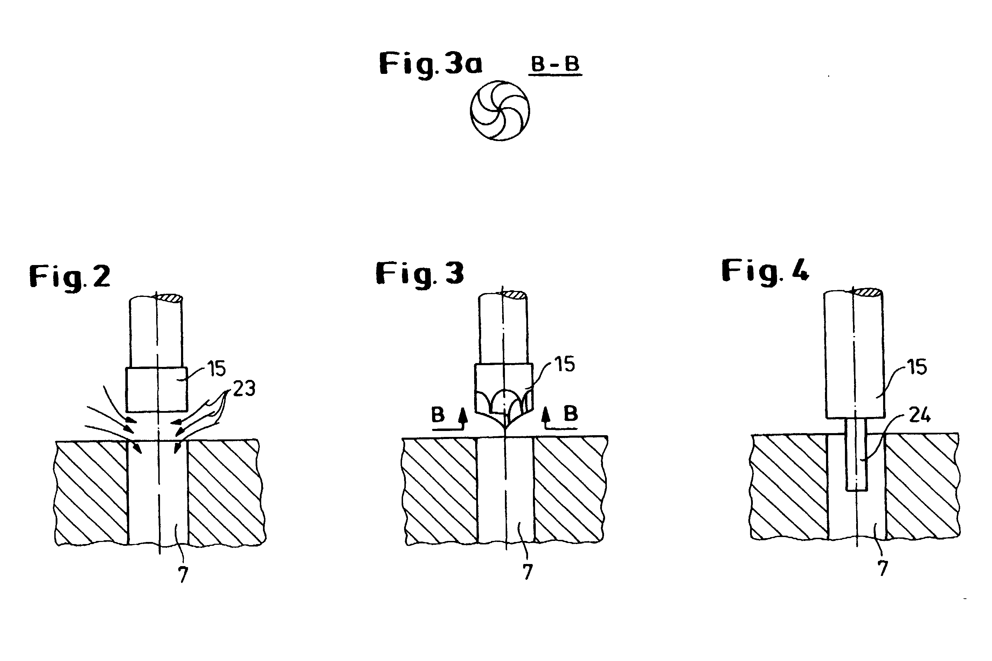

Fig. 2 zeigt eine vergrößerte Darstellung des Details A aus Fig. 1, wobei der Abstand der Stirnseite des Bolzens 15 vom Einlaß in die Düse 7 so gewählt ist, daß eine Drosselung der Einlaufströmung, die durch Pfeile 23 angedeutet ist, erfolgt.

Fig. 3 zeigt eine alternativ vergrößerte Darstellung des Details A aus Fig. 1, wobei die Stirnseite des Bolzens 15 derart gestaltet ist, daß eine rotierende Einlaufströmung erzeugt wird.

Fig. 3a zeigt eine Ansicht gegen die Stirnseite des Bolzens 15.

Fig. 4 zeigt einen Bolzen 15 mit einem den Querschnitt der Einlaufströmung in die Düse 7 verengenden Vorsatz 24.

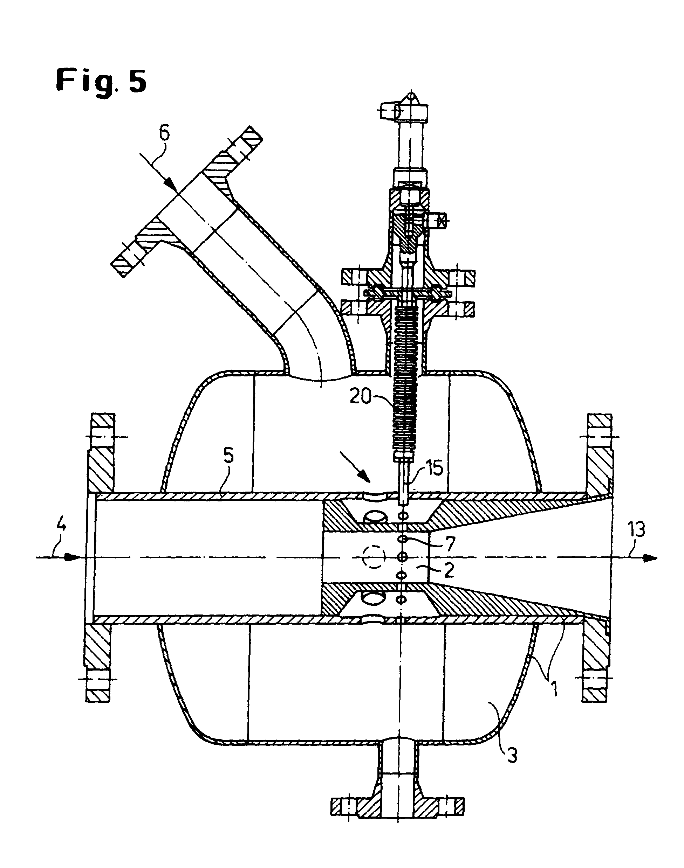

Fig. 5 zeigt den axialen Schnitt durch einen erfindungsgemäßen Mischer-Reaktor, wobei die Mischkammer 2 als Venturi-Rohr ausgebildet ist. Die Verteilkammer 3 ist konzentrisch um die Mischkammer 2 angeordnet. Die Düsen 7 münden radial in die Mischkammer 2. Entsprechend sind die Bolzen 15 einzeln über Faltenbalgabdichtungen 20 radial verschiebbar. Im übrigen sind der Darstellung in Fig. 1 entsprechende Elemente durch gleiche Bezugszeichen bezeichnet.

## Patentansprüche

1. Mischer-Reaktor zur Vermischung und Durchführung bzw. Einleitung einer Reaktion von mindestens zwei fließfähigen Stoffen, bestehend aus einem im wesentlichen rotationssymmetrischen Gehäuse, enthaltend eine Mischkammer mit getrennten Einlässen für die mindestens zwei Stoffe und einem Auslaß, wobei der Einlaß für den mindestens ersten Stoff in der Achse der Mischkammer vorgesehen ist und der Einlaß für den mindestens zweiten Stoff in Form einer Vielzahl von rotationssymmetrisch zur Achse der Mischkammer angeordneten Düsen ausgebildet ist, **dadurch gekennzeichnet, daß** jeder Düse ein in Richtung der Düsenachse verschiebbarer Bolzen zugeordnet ist.

2. Mischer-Reaktor nach Anspruch 1, wobei das Gehäuse eine der Mischkammer vorgeordnete Verteilkammer mit einem Einlaß für den mindestens zweiten Stoff aufweist und die Bolzen aus der Verteilkammer in die Düsen einführbar sind.

3. Mischer-Reaktor nach Anspruch 1 oder 2, wobei die Mischkammer in Form eines Venturi-Rohres ausgebildet ist und die Düsen zur Einleitung des mindestens zweiten Stoffes im wesentlichen radial an der engsten Stelle des Venturi-Rohres in die Mischkammer einmünden.

4. Mischer-Reaktor nach Anspruch 1 oder 2, wobei die Mischkammer in Form eines Kreiselmischers mit Rotor- und Statormischelementen ausgebildet ist.

5. Mischer-Reaktor nach Anspruch 4, wobei die Düsen achsenparallel in die Mischkammer einmünden und die Bolzen an einem in der Verteilkammer angeordneten Tragring befestigt sind, so daß sie gemeinsam parallel zur Mischkammerachse verschiebbar sind.

6. Mischer-Reaktor nach Anspruch 4 oder 5, wobei die Mischkammer vor dem Auslaß ein Laufrad aufweist.

7. Verfahren zur Durchführung von Reaktionen mindestens zweier fließfähiger Stoffe, **dadurch gekennzeichnet, daß** zumindest als erste Reaktionsstufe ein Mischer-Reaktor nach einem der Ansprüche 1 bis 6 eingesetzt wird und periodisch oder im Falle eines Druckanstieges in der Zufuhrleitung für den zweiten Stoff die Düsen mittels der Bolzen durchstoßen werden.

8. Verfahren nach Anspruch 7, **dadurch gekennzeichnet, daß** zumindest der zweite Stoff mittels eines Lösungs- oder Suspensionsmediums zugeführt wird, wobei das Lösungs- oder Suspensionsmedium nach Abtrennung des Reaktionsproduktes recycliert wird.

9. Verfahren nach Anspruch 7 oder 8, **dadurch gekennzeichnet, daß** als erster Stoff in einem Lösungsmittel gelöstes Phosgen und als zweiter Stoff ein primäres Amin eingesetzt wird.

## Claims

1. A mixer-reactor for mixing at least two fluid substances and carrying out or initiating a reaction between them, which mixer-reactor consists of a substantially rotationally symmetrical casing containing a mixing chamber having separate inlets for the at least two substances and an outlet, the inlet for the at least first substance being provided within the axis of the mixing chamber and the inlet for the at least second substance being constructed in the form of a plurality of nozzles arranged rotationally symmetrically to the axis of the mixing chamber, **characterised in that** a bolt which is displaceable in the direction of the nozzle axis is allocated to each nozzle.

2. A mixer-reactor according to claim 1, wherein the casing contains a distribution chamber positioned in front of the mixing chamber, which distribution chamber has an inlet for the at least second substance and the bolts can be moved from the distribution chamber into the nozzles.

3. A mixer-reactor according to claim 1 or 2, wherein the mixing chamber is constructed in the form of a Venturi tube and the nozzles for the introduction of the at least second substance lead into the mixing chamber substantially radially at the narrowest part of the Venturi tube.

4. A mixer-reactor according to claim 1 or 2, wherein the mixing chamber is constructed in the form of a rotary mixer having rotor mixing elements and stator mixing elements.

5. A mixer-reactor according to claim 4, wherein the nozzles lead into the mixing chamber parallel to the axis thereof and the bolts are attached to a supporting ring arranged in the distribution chamber, so that they are jointly displaceable parallel to the axis of the mixing chamber.

6. A mixer-reactor according to claim 4 or 5, wherein the mixing chamber contains a rotor disc positioned in front of the outlet.

7. A process for carrying out reactions of at least two fluid substances, **characterised in that** a mixer-reactor according to one of claims 1 to 6 is used at least as the first reaction step and periodically or in the event of a pressure increase in the inlet for the second substance, the nozzles are penetrated by means of the bolts.

8. A process according to claim 7, **characterised in that** the at least second substance is introduced by means of a solvent or suspending medium, the solvent or suspending medium being recirculated after the separation of the reaction product.

9. A process according to claim 7 or 8, **characterised in that** phosgene dissolved in a solvent is used as the first substance and a primary amine is used as the second substance.

## Revendications

1. Mélangeur-réacteur pour le mélange et la conduite ou l'amorçage d'une réaction d'au moins deux substances fluides, consistant en un boîtier sensiblement à symétrie de révolution, contenant une chambre de mélange avec des entrées séparées pour les deux substances au moins et une sortie, où l'entrée pour la première substance au moins est prévue dans l'axe de la chambre de mélange et l'entrée pour la seconde substance au moins est agencée sous forme d'une multiplicité de buses disposées à symétrie de révolution par rapport à l'axe de la chambre de mélange, **caractérisé en ce qu'**à chaque buse est associée une tige déplaçable dans la direction de l'axe de la buse.

2. Mélangeur-réacteur selon la revendication 1, où le boîtier comporte une chambre de distribution précédant la chambre de mélange avec une entrée pour la seconde substance au moins, et les tiges peuvent être introduites dans les buses depuis la chambre de distribution.

3. Mélangeur-réacteur selon la revendication 1 ou 2, où la chambre de mélange est agencée sous forme d'un tube de Venturi et les buses pour l'introduction de la seconde substance au moins débouchent dans la chambre de mélange sensiblement radialement au niveau de l'endroit le plus étroit du tube de Venturi.

4. Mélangeur-réacteur selon la revendication 1 ou 2, où la chambre de mélange est agencée sous forme d'un mélangeur centrifuge avec des éléments mélangeurs de type rotor et des éléments mélangeurs de type stator.

5. Mélangeur-réacteur selon la revendication 4, où les buses débouchent dans la chambre de mélange parallèlement à l'axe et les tiges sont fixées sur un anneau porteur disposé dans la chambre de distribution de sorte qu'elles sont déplaçables ensemble parallèlement à l'axe de la chambre de mélange.

6. Mélangeur-réacteur selon la revendication 4 ou 5, où la chambre de mélange comporte une roue mobile avant la sortie.

7. Procédé pour conduire des réactions d'au moins deux substances fluides, **caractérisé en ce qu'**un mélangeur-réacteur selon l'une des revendications 1 à 6 est utilisé au moins comme première étape réactionnelle et les buses sont traversées au moyen des tiges périodiquement ou dans le cas d'une augmentation de la pression dans la conduite d'amenée pour la seconde substance.

8. Procédé selon la revendication 7, **caractérisé en ce qu'**au moins la seconde substance est introduite au moyen d'un solvant ou d'un milieu de suspension, où le solvant ou milieu de suspension est recyclé après séparation du produit réactionnel.

9. Procédé selon la revendication 7 ou 8, **caractérisé en ce que** du phosgène dissous dans un solvant est utilisé comme première substance et une amine primaire est utilisée comme seconde substance.
